# EUROPEAN PATENT SPECIFICATION

(11) **EP 2 338 772 B1**
(45) Date of publication and mention of the grant of the patent: **11.02.2015**
(21) Application number: 10195623.3
(22) Date of filing: 17.12.2010
(51) Int. Cl.: B62J 35/00, G01F 23/24, F02M 37/00

(54) **Motorcycle**
Motorrad
Motocyclette

(30) Priority: 22.12.2009 JP 2009290551; 04.10.2010 JP 2010224936
(43) Date of publication of application: 29.06.2011
(73) Proprietor: KAWASAKI JUKOGYO KABUSHIKI KAISHA, Kobe shi, Hyogo 650-8670 (JP)
(72) Inventor: Kikuchi, Hidenori, Hyogo 673-8666 (JP); Kashihara, Takeshi, Hyogo 673-8666 (JP); Kinoshita, Masato, Hyogo 673-8666 (JP)
(74) Representative: Hoffmann Eitle

(56) References cited:
- EP-A1- 1 642 813
- JP-A- 2003 120 455
- JP-B- 6 037 864
- US-B1- 6 968 739

## Description

### BACKGROUND OF THE INVENTION

### 1. Field of the Invention

The present invention relates to a motorcycle comprising a fuel tank.

### 2. Description of the Related Art

In a fuel tank for a motorcycle provided with a fuel pump, in a case where a fuel remaining amount in the fuel tank is small, and when fuel is moved due to acceleration, deceleration, or the like of the motorcycle and the fuel is placed only in one part in the fuel tank, the fuel in the vicinity of a suction port of the fuel pump is reduced, and there is a possibility of fuel supply shortage. In order to prevent such fuel supply shortage due to movement of the fuel, Japanese Unexamined Patent Publication No. 2003-214274 discloses a configuration that a fuel pump is attached to a bottom part in a fuel tank, a fuel reservoir is provided by opening a lower end suction portion of the fuel pump, a fuel take-out pipe is provided on a step surface wall regulating movement of the fuel, and the fuel reservoir and the fuel take-out pipe are connected by an external pipe.

A prior art document is Japanese Unexamined Patent Publication No. 2003-214274.

However, in such a fuel tank, the fuel pump and the fuel take-out pipe are provided in the fuel tank. Thus, a structure of the fuel tank is complicated.

JP 2003-120455 A describes a fuel feeder that feeds fuel from a fuel tank to a fuel injection valve. A fuel pump is mounted on the external surface of a fuel tank bottom with a fuel suction port facing the inside of the fuel tank. The fuel suction port may be made to face the inside of the fuel tank from the bottom side surface of the fuel tank. To minimize the rest of the fuel, there is provided a fuel pocket swelled downward from the fuel tank bottom. The external wall surface of the fuel pocket is mounted with the fuel pump. The fuel pump is a brushless motor which includes a rotor with a magnet jointed to an impeller and a stator coil which is at such a position as to face the magnet and is outside a housing.

EP 1 642 813 A1 describes a transparent fuel tank of a motorcycle which is formed of transparent resin so that piping under the fuel tank can be visually inspected. It is a structure having the same shape as a normal fuel tank, and includes a bottom plate and a body portion combined together. Alternatively, it has the same shape as the bottom plate of the normal fuel tank. It is provided with a fuel piping (fuel hose). The state of wiring and piping disposed under the normal fuel tank is inspected visually through the transparent fuel tank. The actual movement of the wiring and piping is visually inspected through the transparent fuel tank while rotating the transparent fuel tank.

US 6,968,739 B1 describes a gauge for indicating a level of a liquid in a tank including a display device and a control unit coupled thereto. The display device includes multiple light-emitting elements. The control unit receives a liquid level signal, measures a magnitude of the liquid level signal, and activates a number of the light-emitting elements dependent upon the magnitude. In one embodiment the control unit receives a resent signal and performs a calibration routine in response. The gauge may include a housing and a cap portion attached to the housing. The display device and the control unit may be positioned within the housing. The gauge may include conveying means (e.g., an array of light pipes) for conveying light emitted by each of the light-emitting elements through an outer side surface of the cap portion.
A further fuel tank for a motorcycle is described in JP 6-037864 B.

### SUMMARY OF THE INVENTION

An object of the present invention is to provide a motorcycle comprising a fuel tank capable of preventing fuel supply shortage in a case where a fuel remaining amount in the fuel tank is small, the fuel tank having a simple structure.

According to the present invention, there is provided a motorcycle comprising a fuel tank as defined in claim 1. The fuel tank includes a main body portion for storing fuel; a fuel pump for suctioning the fuel in the main body portion and supplying the fuel to a fuel supply portion of an engine; and a fuel suction port of the fuel pump. The suction port is provided on a bottom surface of a front part in an internal space of the main body portion, the fuel pump is positioned outside the main body portion and attached to the suction port. A partition member for hindering at least a rearward movement of the fuel is provided in the internal space of the main body portion,The motorcycle is a straddle type, a rising portion protruding upward is provided in a center part in the lateral direction on the bottom surface of the main body portion so as to extend in the front and rear direction, and the rising portion is mounted on a main frame of the motorcycle, and a lower part in the main body portion is divided into both side parts in the lateral direction by the rising portion, and the suction port is provided in one of the both side parts, the fuel tank is arranged on the front side of a seat for a driver of the motorcycle, and the partition member is provided so as to surround the suction port.

With the above configuration, the fuel pump is positioned outside the main body portion. Thus, the structure of the fuel tank can be simplified. The partition member for hindering the rearward movement of the fuel is provided in the internal space of the main body portion. Thus, the fuel supply shortage in a case where the fuel remaining amount in the main body portion is small can be prevented. By providing the suction port in the front part in the internal space of the main body portion, a configuration around a rear part of the main body portion can be simplified. As a result, in comparison to a case where the suction port is provided in the rear part of the main body portion, an upper space of the engine can be more widely ensured. Since the fuel pump can be arranged on the front side more than a conventional example, the fuel pump can be arranged at a position so as to receive a relatively less thermal influence of the engine.

The motorcycle is preferably further provided with the following configurations.
(1) In the bottom surface of the front part in the internal space of the main body portion, a part where the suction port is provided is at a lower position than the other part.
(2) The partition member has a rear wall positioned on the rear side of the suction port, and a side wall positioned on the opposite side of the rising portion in the lateral direction.
(3) In the above configuration (2), the side wall is formed so as to be higher gradually from the vehicle front side toward the rear side.
(4) In the above configuration (2) or (3), the partition member is formed by jointing a first part serving as the rear wall and a second part serving as the side wall.

With the above configuration (1), the suction port is provided at a lowest position of the internal space of the main body portion. Thus, even in a case where the fuel remaining amount in the main body portion is small, fuel suction by the fuel pump can be efficiently performed.

With the above configuration (2), the rising portion is used as the side wall on one side of the partition member. Thus, a structure of the partition member can be simplified.

With the above configuration (3), the side wall is formed so as to be higher gradually from the front side toward the rear side in consideration with inclination of a liquid surface of the fuel when the motorcycle climbs a hill. Thus, without lowering a performance of the side wall for hindering movement of the fuel, weight of the side wall can be reduced and weight of the partition member can be reduced.

With the above configuration (4), the partition member can be easily manufactured.

### BRIEF DESCRIPTION OF THE DRAWINGS

Fig. 1 is a left side view of a motorcycle provided with a fuel tank according to an embodiment of the present invention;
Fig. 2 is an enlarged perspective view of a fuel tank part;
Fig. 3 is a side transparent view of the fuel tank;
Fig. 4 is a front transparent view of the fuel tank;
Fig. 5 is an upper transparent view of the fuel tank;
Fig. 6 is an enlarged perspective view of a thermistor part of Fig. 3; and
Fig. 7 is an arrow VII view of Fig. 2 showing a partition member.

### DETAILED DESCRIPTION OF THE INVENTION

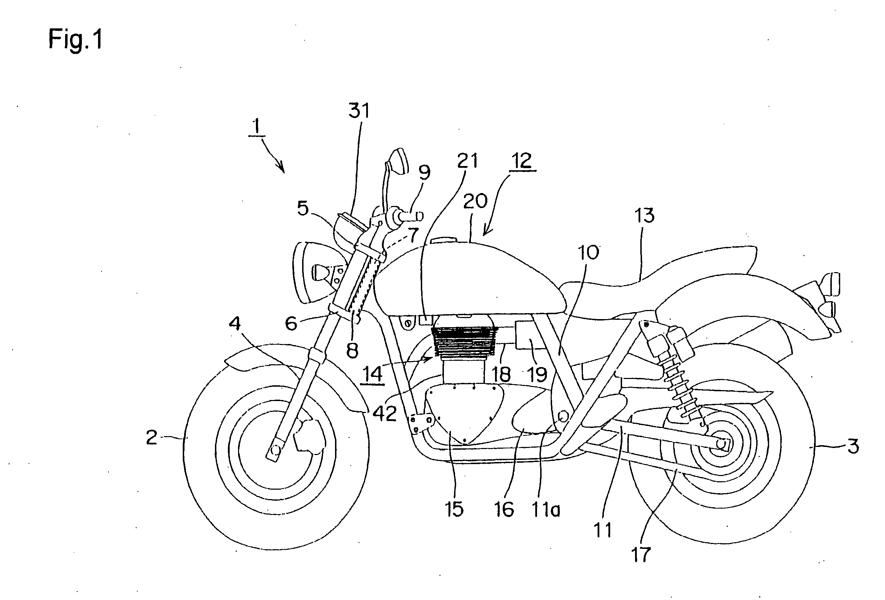

Fig. 1 is a left side view of a motorcycle 1 provided with a fuel tank according to an embodiment of the present invention. It should be noted that in the following description, a concept of the direction used in the present embodiment corresponds to a concept of the direction seen from a driver of the motorcycle 1.

As shown in Fig. 1, the motorcycle 1 is provided with a front wheel 2 and a rear wheel 3, and the front wheel 2 is rotatably supported on a lower part of a front fork 4 extending in the substantially up and down direction. The front fork 4 is supported on a steering shaft 7 via an upper bracket 5 provided on an upper end thereof and an under bracket 6 provided on the lower side of the upper bracket 5. The steering shaft 7 is rotatably supported by a head pipe 8. A bar shape steering handle 9 extending in the left and right direction is attached to the upper bracket 5. Therefore, when the driver oscillates the steering handle 9 leftward and rightward, the front wheel 2 is steered taking the steering shaft 7 as a rotation axis. A meter 31 is arranged on the front side of the steering handle 9.

A main frame 10 is provided so as to extend rearward from the head pipe 8. A front end 11a of a swingarm 11 is axially supported on the main frame 10, and the rear wheel 3 is rotatably supported on a rear end of the swingarm 11. A fuel tank 12 is arranged on the upper side of the main frame 10 and on the rear side of the steering handle 9, and a seat 13 for the driver is arranged on the rear side of the fuel tank 12. An engine 14 is disposed substantially immediately below the fuel tank 12. The engine 14 is an upright single-cylinder four-cycle engine provided upright in the substantially vertical direction, and a crankcase 15 is arranged in a lower part of a cylinder 42. A gear case 16 is arranged in a rear part of the crankcase 15, and mechanical power of gears is transmitted to the rear wheel 3 via a chain 17.

A throttle body 18 having an air intake passage for adjusting an air intake amount is connected to a rear part of the engine 14. An air intake duct 19 having an air intake passage with an upstream part communicating with an air cleaner is connected to a rear part of the throttle body 18.

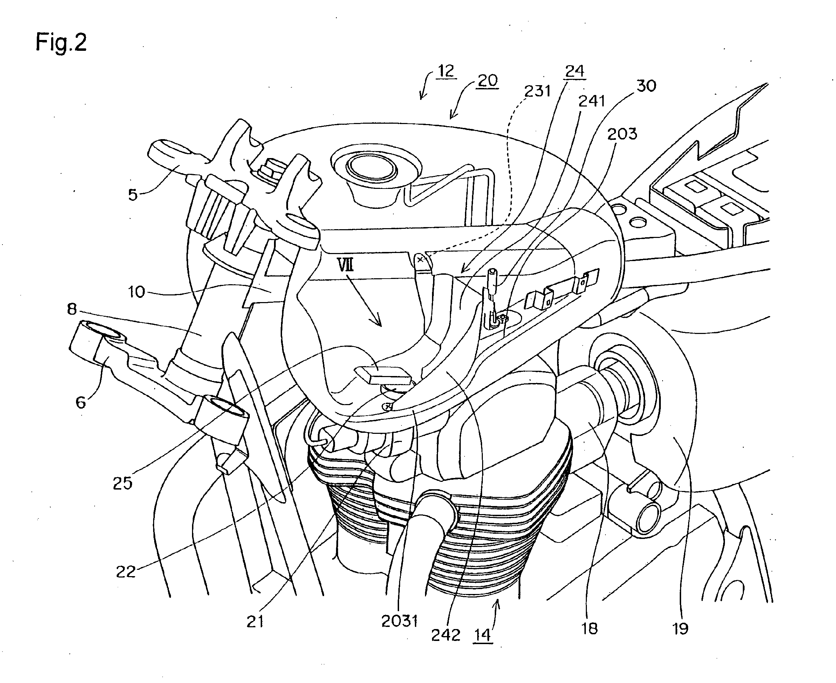

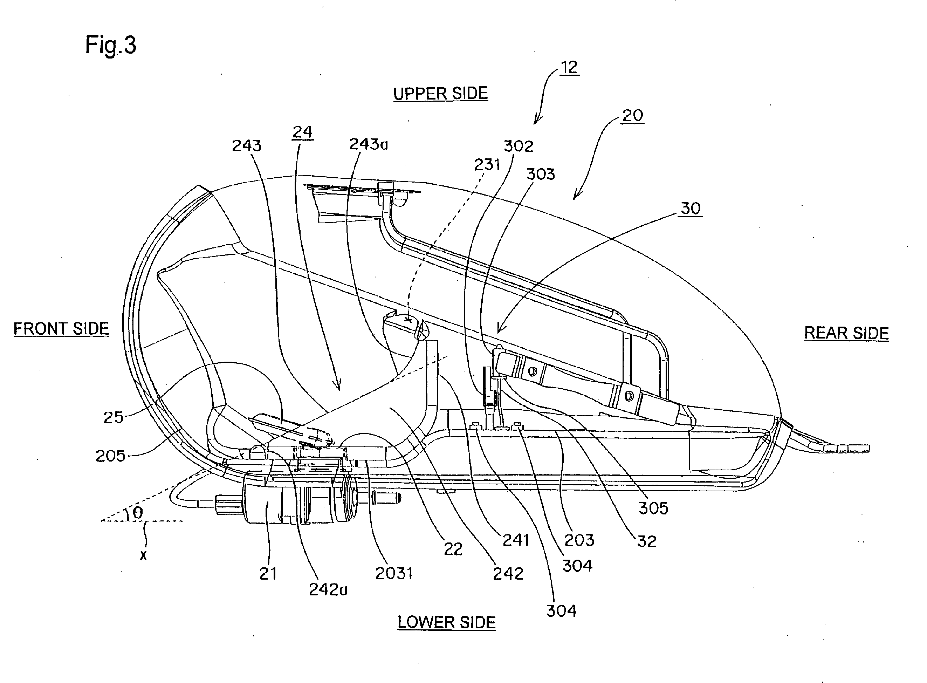

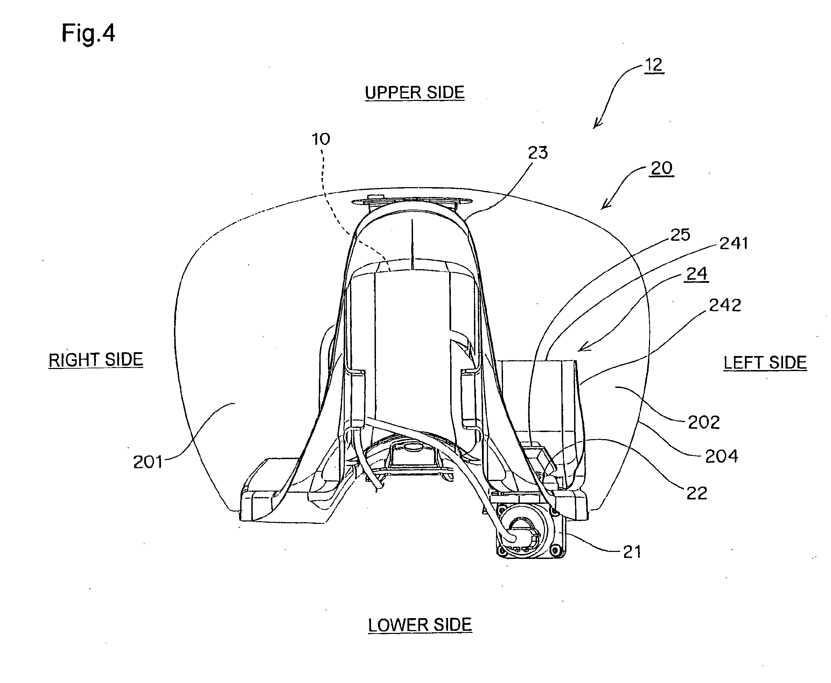

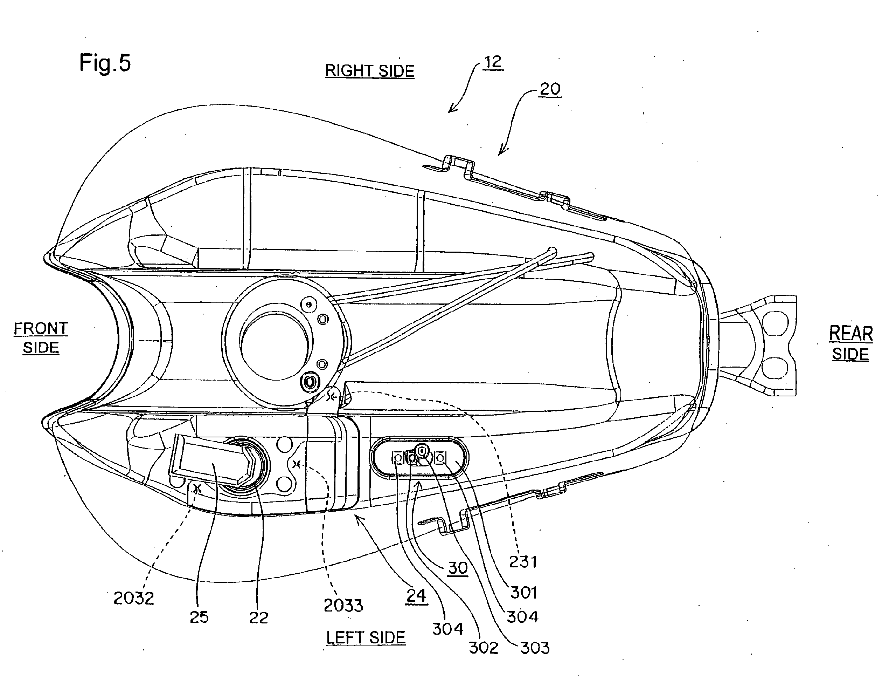

Fig. 2 is an enlarged perspective view of a part of the fuel tank 12 showing a state that the seat 13 is detached. In Fig. 2, the interior of the fuel tank 12 is transparently shown. Fig. 3 is a side transparent view of the fuel tank 12, Fig. 4 is a front transparent view of the fuel tank 12, and Fig. 5 is an upper transparent view of the fuel tank 12. The fuel tank 12 has a main body portion 20 storing fuel, a fuel pump 21 for suctioning the fuel in the main body portion 20 and supplying the fuel to the engine 14, and a fuel suction port 22 of the fuel pump 21.

As shown in Fig. 4, a rising portion 23 protruding upward is provided in a center part in the lateral direction of the main body portion 20 so as to extend in the vehicle front and rear direction, and the rising portion 23 is mounted on the main frame 10 while straddling one main frame 10. A lower part of the main body portion 20 is divided into a right part 201 and a left part 202 by the rising portion 23.

As shown in Figs. 3 and 4, the suction port 22 is provided on a bottom surface 2031 in a front part of the left part 202 in the present embodiment. As shown in Fig. 3, the bottom surface 2031 is formed at a lower position than the other bottom surface 203 in the main body portion 20. A suction filter 25 for filtering impurities contained in the fuel is attached to an upper part of the suction port 22 in the main body portion 20.

A thermistor 30 is provided in the bottom surface 203 as detection unit for detecting a fuel remaining amount in the main body portion 20.
The thermistor 30 is a separate body from the fuel pump 21 provided outside the main body portion 20, and positioned in a substantially center part in the lateral direction and in the vehicle front and rear direction in the main body portion 20. The thermistor 30 is provided on the rear side of the fuel pump 21 and on the rear side of a partition member 24.

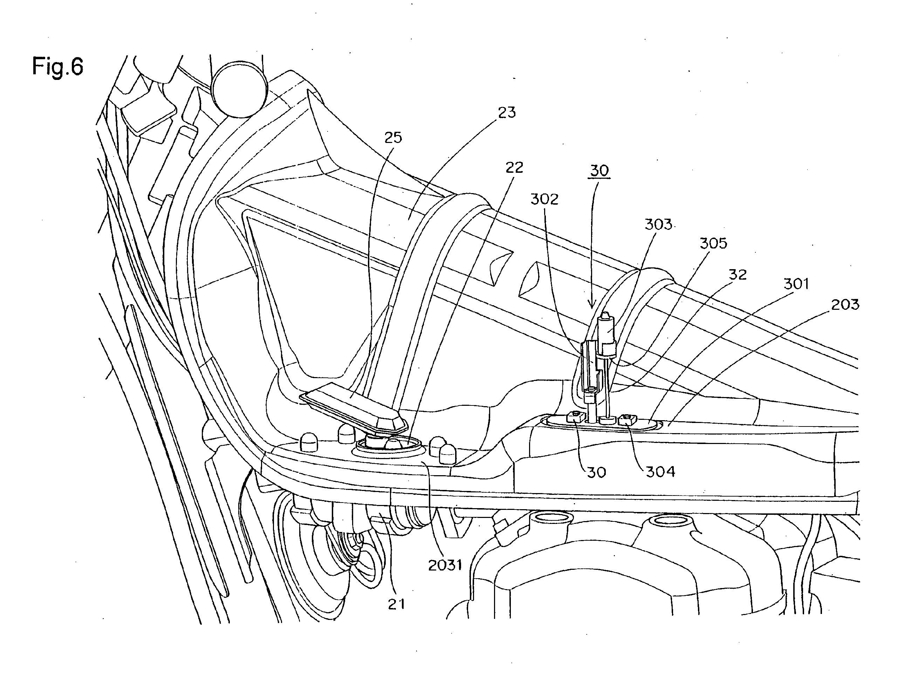

Fig. 6 is an enlarged perspective view of a part of the thermistor 30 of Fig. 3. In Fig. 6, the partition member 24 is deleted. The thermistor 30 has a base plate 301, a support leg 302, and a detection portion 303 having a sensor. The base plate 301 is fixed to the bottom surface 203 by welding with a pair of front and rear welding nuts 304. The support leg 302 is attached onto the base plate 301, and a detection portion support base 305 for positioning the detection portion 303 at fixed length from the bottom surface 203 is provided in the support leg 302. The detection portion 303 is mounted on the detection portion support base 305. A cable 32 extends from a lower end surface of the detection portion 303. The cable 32 extends downward through the base plate 301 so as to connect the detection portion 303 and the meter 31 arranged on the front side of the steering handle 9. The meter 31 has a calculation portion for calculating the fuel remaining amount in the main body portion 20 by a signal from the detection portion 303 of the thermistor 30, and a display portion for displaying a calculation result of the calculation portion.

The fuel remaining amount in the main body portion 20 is specifically detected as follows. The detection portion 303 of the thermistor 30 has a resistance value changed in accordance with a temperature change. Since a temperature around the detection portion 303 is different between a case where the detection portion 303 is dipped in the fuel and a case where the detection portion is not dipped in the fuel, the resistance value of the detection portion 303 is different. A current value corresponding to the resistance value of the detection portion 303 is sent to the calculation portion of the meter 31 through the cable 32. The calculation portion of the meter 31 recognizes that a liquid surface of the fuel is lower than a position of the detection portion 303 in the up and down direction by a change in the current value sent from the detection portion 303, and lights a fuel alarm lamp serving as the display portion of the meter 31. The driver grasps that the fuel remaining amount in the main body portion 20 is small by the lit fuel alarm lamp. Therefore, since the detection portion 303 is arranged in the substantially center part in the lateral direction and in the vehicle front and rear direction in the main body portion 20, even upon a change in a vehicle posture of the motorcycle 1 or acceleration and deceleration of the motorcycle 1, a change of the liquid surface of the fuel in the detection portion 303 is reduced, so that the fuel remaining amount can be precisely detected.

The partition member 24 for hindering at least rearward movement of the fuel in the main body portion 20 is provided so as to surround the suction port 22. As shown in Figs. 3 and 5, the partition member 24 is attached to welding points 2032 and 2033 of the bottom surface 2031 and one part 231 of a left side surface of the rising portion 23 by spot welding.

As shown in Fig. 3, the partition member 24 has a rear wall 241 positioned on the rear side of the suction port 22, and a side wall 242 positioned on the left side of the suction port 22. A front upper part of the side wall 242 is cut out so as to be higher gradually from the front side toward the rear side. In a case where the motorcycle 1 is positioned on a horizontal plane X, an upper end 243 of the side wall 242 is inclined by a predetermined degree θ or more relative to the horizontal plane X. This angle θ corresponds to an assumed climbing angle of the motorcycle 1. For example, in a case where the assumed climbing angle is 22 degrees, the upper end 243 of the side wall 242 is preferably inclined by a degree from 15 to 30 relative to the horizontal plane X. Therefore, in a case where the motorcycle 1 climbs a hill of the assumed climbing angle, the upper end 243 of the side wall 242 is horizontal to the horizontal plane, that is, parallel to the liquid surface of the fuel. As shown by 243a in Fig. 3, the upper end 243 of the side wall 242 may be formed so as to be inclined further more than the predetermined angle θ from the front side toward the rear side. The side wall 242 is arranged so as to be spaced from a side wall 204 in the main body portion 20, and a front end 242a of the side wall 242 is preferably spaced from a front wall 205 in the main body portion 20.

As shown in Figs. 2 and 4, the rising portion 23 is positioned on the right side of the partition member 24. Thus, the partition member 24 does not have a side wall positioned on the right side of the suction port 22.

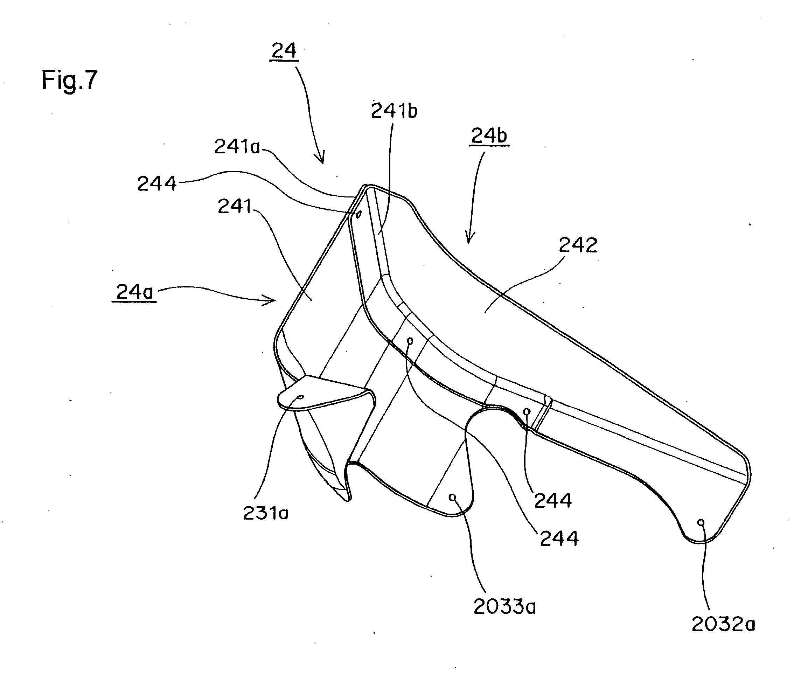

Fig. 7 is an arrow VII view of Fig. 2 showing the partition member 24. The partition member 24 is formed by jointing a first part 24a serving as the rear wall 241 and a second part 24b serving as the side wall 242. The second part 24b also serves as one part 241b of the rear wall 241, and is jointed by overlapping the one part 241b of the second part 24b and one part 241a of the rear wall 241 of the first part 24a. The first part 24a and the second part 24b are jointed to each other by spot welding at a plurality of joint points 244. The second part 24b is attached to the bottom surface 2031 by spot welding at a welding point 2032a corresponding to the welding point 2032 of the bottom surface 2031. The first part 24a is attached to the bottom surface 2031 by spot welding at a welding point 2033a corresponding to the welding point 2033 of the bottom surface 2031, and also attached to the rising portion 23 by spot welding at a welding point 231a corresponding to the one part 231 of the left side surface of the rising portion 23.

The movement of the fuel in the main body portion 20 of the fuel tank 12 will be described as follows.

The fuel stored in the main body portion 20 is suctioned from the suction port 22 via the suction filter 25 by the fuel pump 21, and sent to the engine 14. With a decrease in the fuel remaining amount in the main body portion 20, the fuel passes through a gap between the side wall 242 and the side wall 204 and the front wall 205 in the main body portion 20 and flows around the suction port 22, since the bottom surface 2031 on which the suction port 22 is provided is formed at a lower position than the bottom surface 203.

When the motorcycle 1 is accelerated, the fuel in the main body portion 20 is once moved rearward. However, the partition member 24 hinders the rearward movement of the fuel around the suction port 22. As a result, even in a case where the fuel remaining amount in the main body portion 20 is small, the fuel is stored around the suction port 22, so that the fuel pump 21 can suction the fuel from the suction port 22 and send the fuel to the engine 14.

With the fuel tank 12 of the above configuration, the following effects can be obtained.

(1) The fuel pump 21 is positioned outside the main body portion 20. Thus, in comparison to a case where the fuel pump 21 is provided in the main body portion 20, a structure of the main body portion 20 can be simplified.

(2) The partition member 24 for hindering the rearward movement of the fuel is provided around the suction port 22 in the main body portion 20. Thus, even in a case where the fuel remaining amount in the main body portion 20 is small, the fuel is stored around the suction port 22, so that the fuel pump 21 can send the fuel to the engine 14.

(3) Since the suction port 22 is provided on the bottom surface 2031 in the front part of the left part 202 of the main body portion 20, a configuration around the rear part of the main body portion 20 can be simplified. As a result, in comparison to a case where the suction port 22 is provided in the rear part of the main body portion 20, an upper space of the engine 14 can be more widely ensured. For example, the throttle body 18 and the air intake duct 19 can be easily arranged. Since the fuel pump 21 can be arranged on the front side more than a conventional example, the fuel pump 21 can be arranged at a position so as to receive a relatively less thermal influence of the engine 14.

(4) The suction port 22 is provided on the bottom surface 2031 at a lowest position among the bottom surface 203 in an internal space of the main body portion 20. Thus, even in a case where the fuel remaining amount in the main body portion 20 is small, fuel suction by the fuel pump 21 can be efficiently performed.

(5) The partition member 24 is attached in the main body portion 20 by spot welding. Thus, the partition member 24 can be easily provided in the main body portion 20.

(6) The main body portion 20 has the rising portion 23. Thus, the main body portion can be easily attached onto the main frame 10 of the straddle type motorcycle 1.

(7) The suction port 22 is provided only in the left part 202 divided by the rising portion 23. Thus, in comparison to a case where the suction ports 22 are respectively provided in the left part 202 and the right part 201, only one suction port 22 is required. As a result, a structure of the fuel tank 12 can be simplified.

(8) The rising portion 23 is used as the side wall on one side of the partition member 24. Thus, since the partition member 24 only has the side wall on the opposite side of the rising portion, a structure of the partition member 24 can be simplified. As a result, weight of the partition member 24 can be reduced.

(9) In consideration with inclination of the liquid surface of the fuel when the motorcycle 1 climbs a hill and in consideration with waves of the liquid surface of the fuel due to the acceleration of the motorcycle 1 and the vibration at the time of the moving of the motorcycle 1 or the like, the side wall 242 of the partition member 24 is formed so as to be higher gradually from the front side toward the rear side That is, without lowering a performance of the side wall 242 for hindering the movement of the fuel, the front upper part of the side wall 242 is cut out. As a result, weight of the side wall 242 can be reduced and the weight of the partition member 24 can be reduced.

(10) The partition member 24 is formed by jointing the first part 24a and the second part 24b. Thus, particularly in the partition member 24 having a deeply drawn shape as shown in Fig. 6, the partition member 24 can be easily manufactured.

(11) The first part 24a and the second part 24b are jointed at the plurality of joint points 244. Thus, both the members can be reliably jointed. Since joint means thereof is spot welding, the first part 24a and the second part 24b can be easily jointed.

(12) The thermistor 30 is the separate body from the fuel pump 21 and positioned on the rear side of the fuel pump 21 and the partition member 24. Thus, the thermistor 30 can be arranged in the substantially center part in the lateral direction and in the vehicle front and rear direction of the fuel tank 12. As a result, the thermistor 30 can be arranged at a position so as to receive a relatively less influence upon the movement of the fuel due to the change in the vehicle posture of the motorcycle 1, and the acceleration and the deceleration, so that the fuel remaining amount in the main body portion 20 can be precisely detected.

(13) The calculation portion for calculating the fuel remaining amount is provided in the meter 31. Thus, the existing calculation portion in the meter 31 can be utilized, the number of parts can be reduced, and the number of harness can also be reduced. Since the display portion for displaying the fuel remaining amount is provided in the meter 31, the driver can easily grasp the fuel remaining amount.

In the present embodiment, in consideration with a parking state of the motorcycle 1 by a side stand (the side stand is generally provided on the left side in a lower part of the main frame 10 of the motorcycle 1), the suction port 22 is provided in the left part 202 of the main body portion 20. This is to store the fuel around the suction port 22 even in the parking state of the motorcycle 1 in a case where the fuel remaining amount in the fuel tank 12 is small. Similarly, the thermistor 30 is provided on the bottom surface 203 of the left part 202 of the main body portion 20. However, the suction port 22 and the thermistor 30 are not limited to the left part 202 of the main body portion 20 but may be provided in the right part 201 or may respectively be provided both in the left part 202 and the right part 201. In a case where the suction port 22 is provided in the right part, the partition member 24 has a side wall on the right side and a rear wall.

In the present embodiment, the partition member 24 is formed by jointing the first part and the second part. However, the partition member may be integrally formed.

In the fuel tank 12 for a non-straddle type motorcycle, the main body portion 20 of the fuel tank 12 sometimes have no rising portion 23. In this case, the partition member 24 may have side walls on the left and right sides and a rear wall or may have an arc shape wall having an opening on the front side. That is, the partition member 24 is only required to have a wall or the like for hindering the rearward movement of the fuel.

The present invention is not limited to the configuration described in the above embodiment but can include variously modified examples with which those skilled in the art can come up without departing from contents described in the claims.

The present invention can provide a motorcycle comprising a fuel tank capable of preventing fuel supply shortage in a case where the fuel remaining amount in the fuel tank is small, the fuel tank having a simple structure. Thus, the present invention has a great applicability in industry.

### DESCRIPTION OF REFERENCE SYMBOLS

- 1: motorcycle
- 2: front wheel
- 3: rear wheel
- 4: front fork
- 5: upper bracket
- 6: under bracket
- 7: steering shaft
- 8: head pipe
- 9: steering handle
- 10: main frame
- 11: swingarm
- 11a: front end
- 12: fuel tank
- 13: seat
- 14: engine
- 15: crankcase
- 16: gear case
- 17: chain
- 18: throttle body
- 19: air intake duct
- 20: main body portion
- 201: right part
- 202: left part
- 203: bottom surface
- 2031: bottom surface
- 204: side wall
- 205: front wall
- 21: fuel pump
- 22: fuel suction port
- 23: rising portion
- 24: partition member
- 24a: first part
- 24b: second part
- 241: rear wall
- 242: side wall
- 243: upper end
- 244: joint point
- 25: suction filter
- 30: thermistor
- 301: base plate
- 302: support leg
- 303: detection portion
- 304: rear welding nut
- 305: detection portion support base
- 31: meter

## Claims

1. A motorcycle (1) comprising a fuel tank (12), the fuel tank (12) comprising:
a main body portion (20) for storing fuel;
a fuel pump (21) for suctioning the fuel in the main body portion and supplying the fuel to a fuel supply portion of an engine; and
a fuel suction port (22) of the fuel pump, wherein
the suction port is provided on a bottom surface (2031) of a front part in an internal space of the main body portion,
the fuel pump is positioned outside the main body portion and attached to the suction port, and
a partition member (24) for hindering at least a rearward movement of the fuel, which is provided in the internal space of the main body portion, and wherein
the motorcycle is a straddle type,
a rising portion (23) protruding upward is provided in a center part in the lateral direction on the bottom surface of the main body portion so as to extend in the front and rear direction, and
the rising portion is mounted on a main frame (10) of the motorcycle, and
a lower part in the main body portion is divided into both side parts (201, 202) in the lateral direction by the rising portion, and
the suction port is provided in one of the both side parts,
the fuel tank is arranged on the front side of a seat (13) for a driver of the motorcycle, and
the partition member is provided so as to surround the suction port.

2. The motorcycle according claim 1, wherein
in the bottom surface of the front part in the internal space of the main body portion, a part where the suction port is provided is at a lower position than the other part.

3. The motorcycle according to claim 1 or 2, wherein
the fuel tank further has a detection unit (30) for detecting a fuel remaining amount in the main body portion,
the detection unit is formed to be a separate body from the fuel pump, and
the detection unit is provided on the rear side of the fuel pump.

4. The motorcycle according to claim 3, wherein
the detection unit is positioned on the rear side of the partition member.

5. The motorcycle according to claim 4, wherein
the detection unit is arranged in a substantially center part in the lateral direction and in the vehicle front and rear direction of the fuel tank.

6. The motorcycle according to any one of claims 1 to 5, wherein
the partition member has a rear wall (241) positioned on the rear side of the suction port, and a side wall (242) positioned on the opposite side of the rising portion in the lateral direction.

7. The motorcycle according to claim 6, wherein
the side wall is formed so as to be higher gradually from the vehicle front side toward the rear side.

8. The motorcycle according to claim 6 or 7, wherein
the partition member is formed by jointing a first part (24a) serving as the rear wall and a second part (24b) serving as the side wall.

9. The motorcycle according to any one of claims 1 to 8, wherein
the suction port is provided on a side of a side stand of the motorcycle in the lateral direction.

## Patentansprüche

1. Motorrad (1) mit einem Kraftstofftank (12), wobei der Kraftstofftank (12) aufweist:
einen Hauptkörperabschnitt (20) zum Bevorraten von Kraftstoff;
eine Kraftstoffpumpe (21) zum Ansaugen des Kraftstoffs in dem Hauptkörperabschnitt und Zuführen des Kraftstoffs zu einem Kraftstoff-Zufuhrabschnitt eines Motors; und
einen Kraftstoff-Ansauganschluss (22) der Kraftstoffpumpe, wobei
der Ansauganschluss an einer Bodenfläche (2031) eines vorderen Abschnitts in einem Innenraum des Hauptkörperabschnitts angeordnet ist;
die Kraftstoffpumpe außerhalb des Hauptkörperabschnitts angeordnet ist und an den Ansauganschluss angeschlossen ist, und
ein Unterteilungs-Element (24) zum Behindern zumindest einer nach hinten gerichteten Bewegung des Kraftstoffs, das in dem Innenraum des Hauptkörperabschnitts vorgesehen ist, und wobei
das Motorrad ein Motorrad vom Grätschsitz-Typ ist,
ein ansteigender Abschnitt (23), der nach oben vorsteht, in einem Mittelabschnitt in der Querrichtung an der Bodenfläche des Hauptkörperabschnitts derart angeordnet ist, dass er sich in der vorne-hinten-Richtung erstreckt, und
der ansteigende Abschnitt an einem Hauptrahmen (10) des Motorrads angebracht ist, und
ein unterer Abschnitt in dem Hauptkörperabschnitt durch den ansteigenden Abschnitt in der Querrichtung in beide Seitenteile (201, 202) unterteilt ist, und
der Ansauganschluss in einem der beiden Seitenteile angeordnet ist,
der Treibstofftank an der Vorderseite eines Sitzes (13) für einen Fahrer des Motorrads angeordnet ist, und
das Unterteilungs-Element derart angeordnet ist, dass es den Ansauganschluss umgibt.

2. Motorrad nach Anspruch 1, bei dem
in der Bodenfläche des vorderen Abschnitts in dem Innenraum des Hauptkörperabschnitts ein Abschnitt, an dem der Ansauganschluss angeordnet ist, an einer weiter unten liegenden Stellung angeordnet ist, als der andere Abschnitt.

3. Motorrad nach Anspruch 1 oder 2, bei dem
der Kraftstofftank ferner eine Erfassungseinheit (30) zum Erfassen einer in dem Hauptkörperabschnitt verbleibenden Kraftstoffmenge aufweist,
die Erfassungseinheit derart ausgebildet ist, dass sie ein von der Kraftstoffpumpe separater Körper ist, und
die Erfassungseinheit auf der hintern Seite der Kraftstoffpumpe angeordnet ist.

4. Motorrad nach Anspruch 3, bei dem
die Erfassungseinheit auf der hintern Seite des Unterteilungs-Elements angeordnet ist.

5. Motorrad nach Anspruch 4, bei dem
die Erfassungseinheit im Wesentlichen an einem Mittelabschnitt in der Querrichtung und in der Fahrzeug-vorne-hinten-Richtung des Kraftstofftanks angeordnet ist.

6. Motorrad nach einem der Ansprüche 1 bis 5, bei dem
das Unterteilungs-Element eine hintere Wand (241), die an der Hinterseite des Ansauganschlusses angeordnet ist, und eine Seitenwand (242) aufweist, die an der gegenüberliegenden Seite des ansteigenden Abschnitts in der Querrichtung angeordnet ist.

7. Motorrad nach Anspruch 6, bei dem
die Seitenwand derart ausgebildet ist, dass sie von der Fahrzeug-Vorderseite zur Fahrzeug-Hinterseite graduell höher ist.

8. Motorrad nach Anspruch 6 oder 7, bei dem
das Unterteilungs-Element durch Verbinden eines ersten Abschnitts (24a), der als die hintere Wand dient, und eines zweiten Abschnitts (24b) ausgebildet ist, der als die Seitenwand dient.

9. Motorrad nach einem der Ansprüche 1 bis 8, bei dem
der Ansauganschluss in der Querrichtung an einer Seitenständer-Seite des Motorrads angeordnet ist.

## Revendications

1. Motocyclette (1) comprenant un réservoir de carburant (12), le réservoir de carburant (12) comprenant :
une portion formant corps principal (20) pour stocker du carburant ;
une pompe de carburant (21) pour aspirer le carburant dans la portion formant corps principal et fournir le carburant à une portion d'alimentation en carburant d'un moteur ; et
un orifice d'aspiration de carburant (22) de la pompe de carburant, dans lequel
l'orifice d'aspiration est disposé sur une surface de fond (2031) d'une partie avant dans un espace interne de la portion formant corps principal,
la pompe de carburant est positionnée à l'extérieur de la portion formant corps principal et attachée à l'orifice d'aspiration, et
un élément de séparation (24) pour empêcher au moins un mouvement vers l'arrière du carburant, qui est disposé dans l'espace interne de la portion formant corps principal, et dans lequel
la motocyclette est un type à califourchon,
une portion en élévation (23) dépassant vers le haut est disposée dans une partie centrale dans la direction latérale sur la surface de fond de la portion formant corps principal afin de s'étendre dans la direction avant et arrière, et
la portion en élévation est montée sur un cadre principal (10) de la motocyclette, et
une partie inférieure dans la portion formant corps principal est divisée en deux parties latérales (201, 202) dans la direction latérale par la portion en élévation, et
l'orifice d'aspiration est disposé dans une des deux parties latérales,
le réservoir de carburant est agencé sur le côté avant d'un siège (13) pour un conducteur de la motocyclette, et
l'élément de séparation est disposé afin d'entourer l'orifice d'aspiration.

2. Motocyclette selon la revendication 1, dans laquelle
dans la surface de fond de la partie avant dans l'espace interne de la portion formant corps principal, une partie où l'orifice d'aspiration est disposé est à une position plus basse que l'autre partie.

3. Motocyclette selon la revendication 1 ou 2, dans laquelle
le réservoir de carburant a en outre une unité de détection (30) pour détecter une quantité restante de carburant dans la portion formant corps principal,
l'unité de détection est formée pour être un corps distinct de la pompe de carburant, et
l'unité de détection est disposée sur le côté arrière de la pompe de carburant.

4. Motocyclette selon la revendication 3, dans laquelle l'unité de détection est positionnée sur le côté arrière de l'élément de séparation.

5. Motocyclette selon la revendication 4, dans laquelle
l'unité de détection est agencée dans une partie sensiblement centrale dans la direction latérale et dans la direction avant et arrière de véhicule du réservoir de carburant.

6. Motocyclette selon l'une quelconque des revendications 1 à 5, dans laquelle l'élément de séparation a une paroi arrière (241) positionnée sur le côté arrière de l'orifice d'aspiration, et une paroi latérale (242) positionnée sur le côté opposé de la portion en élévation dans la direction latérale.

7. Motocyclette selon la revendication 6, dans laquelle
la paroi latérale est formée afin d'être graduellement plus haute depuis le côté avant de véhicule vers le côté arrière.

8. Motocyclette selon la revendication 6 ou 7, dans laquelle
l'élément de séparation est formé en assemblant une première partie (24a) servant en tant que la paroi arrière et une seconde partie (24b) servant en tant que la paroi latérale.

9. Motocyclette selon n'importe laquelle des revendications 1 à 8, dans laquelle l'orifice d'aspiration est disposé sur un côté d'une béquille latérale de la motocyclette dans la direction latérale.
